Europäisches Patentamt

European Patent Office

Office européen des brevets

(11) Numéro de publication: **0 494 571 A1**

# DEMANDE DE BREVET EUROPEEN

(21) Numéro de dépôt: **91420459.9**

(22) Date de dépôt: **19.12.91**

(51) Int. Cl.5: **H02B 1/42**, H02G 3/14

(30) Priorité: **07.01.91 FR 9100134**

(43) Date de publication de la demande:
**15.07.92 Bulletin 92/29**

(84) Etats contractants désignés:
**BE DE ES GB IT**

(71) Demandeur: **MERLIN GERIN**
**2, chemin des Sources**
**F-38240 Meylan(FR)**

(72) Inventeur: **Balaud, Philippe**
**Merlin Gerin - Sce. Brevets**
**F-38050 Grenoble Cedex(FR)**
Inventeur: **Velletaz, Gilbert**
**Merlin Gerin - Sce. Brevets**
**F-38050 Grenoble Cedex(FR)**

(74) Mandataire: **Kern, Paul et al**
**Merlin Gerin Sce. Brevets**
**F-38050 Grenoble Cédex 9(FR)**

(54) **Dispositif d'encastrement pour un coffret électrique modulaire.**

(57) Un dispositif d'encastrement pour un coffret modulaire comporte un châssis (11) ayant deux paires de pattes (14,16; 18,20) de fixation disposées en croix et solidarisées au fond (28) du boîtier. Chaque patte est pliée en double équerre et comporte une branche frontale (32) ayant un orifice (40) pour une vis (42) de fixation murale, et une lumière (44) en forme de trèfle pour l'encliquetage d'un tenon (46) d'assemblage en T fixé sur chaque montant (48,50) d'un cadre d'habillage (22) en matériau plastique. Une paire de traverses (52,54) peut être enfilée dans des glissières (56) de réception des montants (48,50) pour former un cache rectangulaire sans vis de fixation apparente.

FIG.5

L'invention est relative à un dispositif d'encastrement adaptable à un coffret électrique de forme parallélépipèdique, inséré à l'intérieur d'un logement ménagé dans un mur, et comprenant des moyens de fixation mécanique du coffret au mur.

Les coffrets à encastrer nécessitent généralement un boîtier spécial ayant un fond encastrable dans un logement conjugué du mur, et un plastron antérieur en forme de cadre de dimension légèrement supérieure à celle du logement, de manière à recouvrir le jeu latéral entre le logement et le fond du boîtier.

L'encastrement d'un coffret standard modulaire de forme parallélépipèdique dans un logement d'un mur laisse subsister un jeu latéral, lequel peut être caché au moyen d'un cadre d'habillage fixé par des vis depuis la face avant. A chaque type de coffret est associé un cadre spécifique, et les vis de fixation sont visibles.

L'objet de l'invention consiste à réaliser un dispositif d'encastrement pour un coffret modulaire associé à un cadre d'habillage sans vis de fixation.

Le dispositif d'encastrement selon l'invention est caractérisé en ce que les moyens de fixation comportent un châssis ayant deux paires de pattes métalliques de fixation murale, disposées en croix symétriquement par rapport au plan médian vertical, et solidarisées au fond du boîtier par des moyens d'assemblage et de positionnement prévus sur les premières branches postérieures, chaque patte du châssis étant pliée en double équerre et comprenant une troisième branche frontale accessible depuis la face avant et équipée:

- d'un orifice appliqué contre le mur à l'extérieur du logement pour autoriser le passage d'une vis de fixation murale,
- de moyens d'encliquetage agencés entre l'orifice et la deuxième branche intermédiaire, et qu'un cadre d'habillage en matériau plastique est composé d'une paire de montants et d'une paire de traverses parallèles deux à deux, chaque montant comprenant:
- des moyens d'assemblage coopérant avec les moyens d'encliquetage pour le montage de chaque montant sur l'une des paires des pattes du châssis,
- et une paire de glissières de réception destinées à recevoir les extrémités des traverses pour constituer un cache rectangulaire modulaire sans vis de fixation apparente.

Selon un mode de réalisation de l'invention, les moyens d'encliquetage sur chaque bras de fixation comportent une lumière en forme de trèfle. Les moyens d'assemblage sont composés d'au moins un tenon en forme de T, l'effet d'encliquetage résultant d'un double mouvement orthogonal en translation du montant provoquant respectivement l'introduction et le verrouillage du tenon dans la lumière.

Chaque glissière de réception comporte un ergot élastique de verrouillage coopérant avec un évidement de la traverse pour assurer un effet de blocage positif en fin de course d'insertion.

La hauteur des montants est constante, mais la longueur des traverses peut être facilement choisie en fonction du nombre de modules du coffret.

D'autres avantages et caractéristiques ressortiront plus clairement de la description suivante d'un mode de réalisation de l'invention, donné à titre d'exemple non limitatif, et représenté aux dessins annexés, dans lesquels:

La figure 1 est une vue arrière du coffret équipé du dispositif d'encastrement selon l'invention, l'ensemble étant représenté à l'intérieur du logement d'un mur.

La figure 2 montre une vue de profil de la figure 1.

Les figures 3 à 7 représentent les différentes phases d assemblage du dispositif d'encastrement sur le coffret.

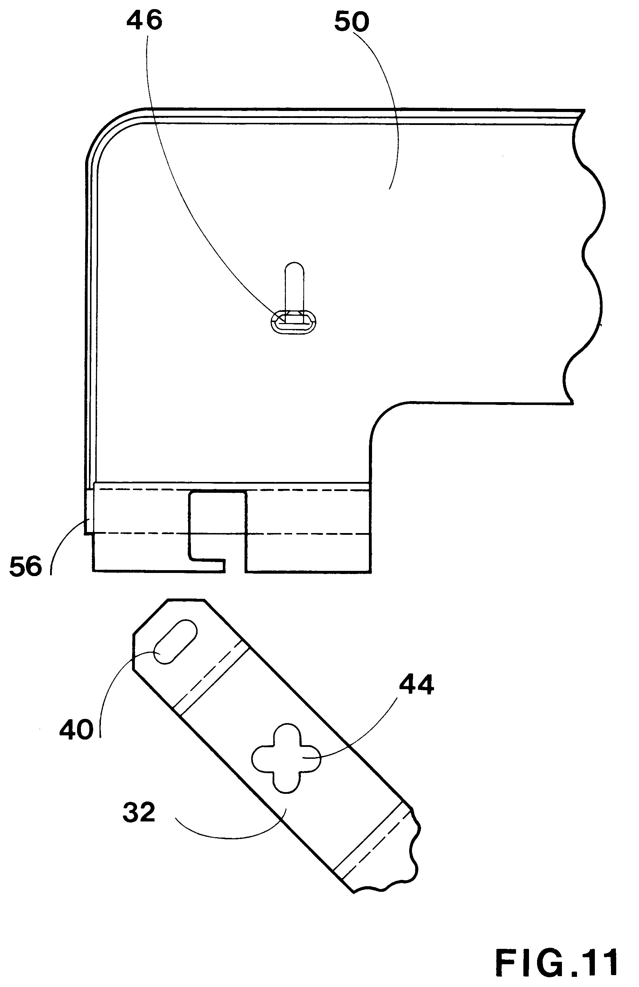

Les figures 8 à 11 montrent le principe de montage d'un montant sur une patte de fixation du châssis.

Les figures 12 à 15 montrent le principe de montage d'une traverse sur un montant.

Sur les figures, un dispositif d'encastrement 10 pour un coffret 12 électrique comporte un châssis 11 à quatre pattes 14,16,18,20 identiques de fixation murale, et un cadre d'habillage 22 modulaire. L'ensemble coffret 12 et pattes 14,16,18,20 de fixation est encastré dans un logement 24 (en pointillé) d'un mur, les dimensions du logement 24 rectangulaire étant supérieures à celles du coffret 12 parallélépipèdique.

Chaque patte de fixation 14,16,18,20 métallique est coudée selon une équerre double, ayant une première branche 26 postérieure d'accrochage au fond 28 du coffret 12, une deuxième branche 30 intermédiaire s'étendant dans le sens de la profondeur, et une troisième branche 32 frontale accessible depuis la face avant 34 du coffret 12.

La deuxième branche 30 est perpendiculaire aux première et troisième branches 26,32 parallèles, et présente une longueur correspondant sensiblement à la profondeur du coffret 12.

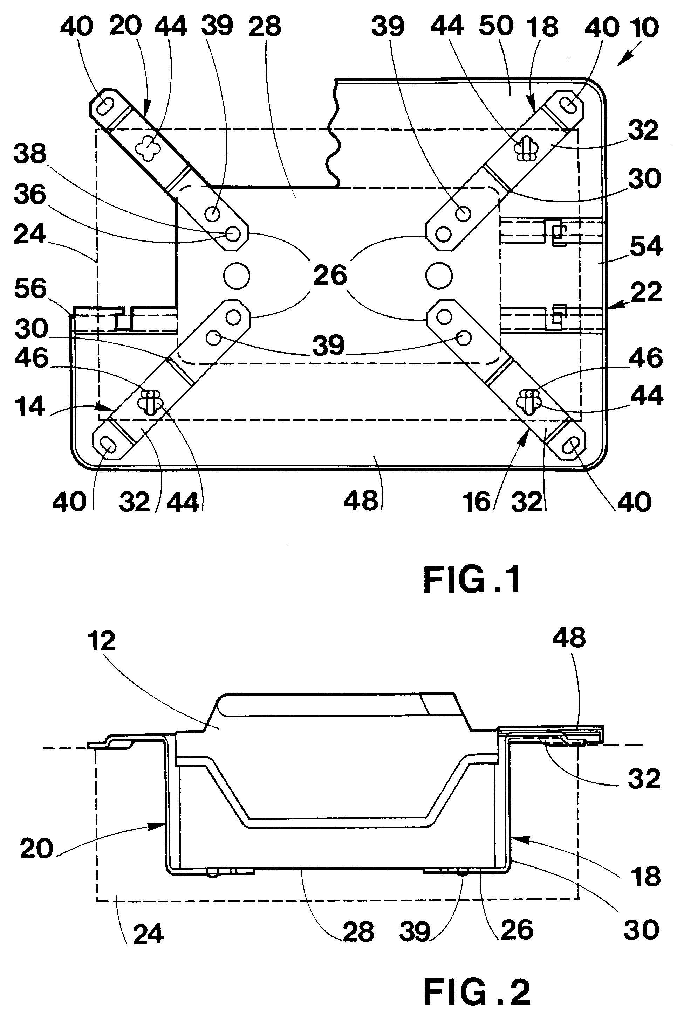

L'extrémité de la première branche 26 postérieure comporte un trou 36 circulaire destiné à être engagé dans un bossage 38 de positionnement de forme cylindrique conjuguée faisant saillie du fond 28. La fixation définitive de chaque patte 14,16,18,20 au fond 28 intervient au moyen d'une vis 39 d'assemblage (figure 2).

L'extrémité de la troisième branche 32 frontale est dotée d'un orifice 40 oblong autorisant le passage d'une vis 42 de fixation murale. Entre l'orifice 40 et la deuxième branche 30, est agencée une lumière 44 en forme de trèfle destinée à coopérer par encliquetage avec l'un des deux tenons 46 d'assemblage en T assujetti à chaque montant 48,50 du cadre d'habillage 22.

Le cadre d'habillage 22 est réalisé en matière plastique, et comporte une paire de montants 48,50 de longueurs constantes coopérant avec une paire de traverses 52,54 pour constituer un cache modulaire sans vis de fixation sur la face avant.

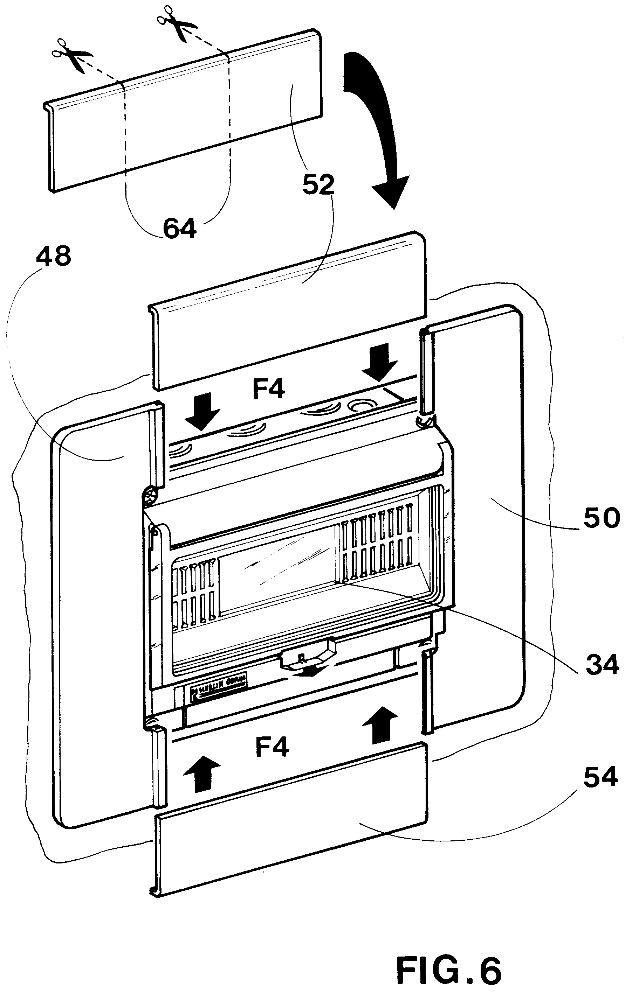

Chaque montant 48,50 présente une forme en C terminée à chaque extrémité par une glissière 56 rectiligne de réception équipée d'un ergot 58 élastique de verrouillage. Chaque traverse 52,54 comprend une surface plane à rebord 60, et à évidement 62 borgne coopérant avec l'ergot 58 de verrouillage lors de l'insertion de la traverse 52,54 dans la glissière 56 correspondante. La longueur de chaque traverse 52,54 est choisie en fonction de la largeur du coffret 12. Des lignes de prédécoupes 64 (figure 6) sont ménagées dans les traverses 52,54 en fonction du nombre de modules du coffret 12.

La mise en place du dispositif d'encastrement 10 s'opère de la manière suivante:

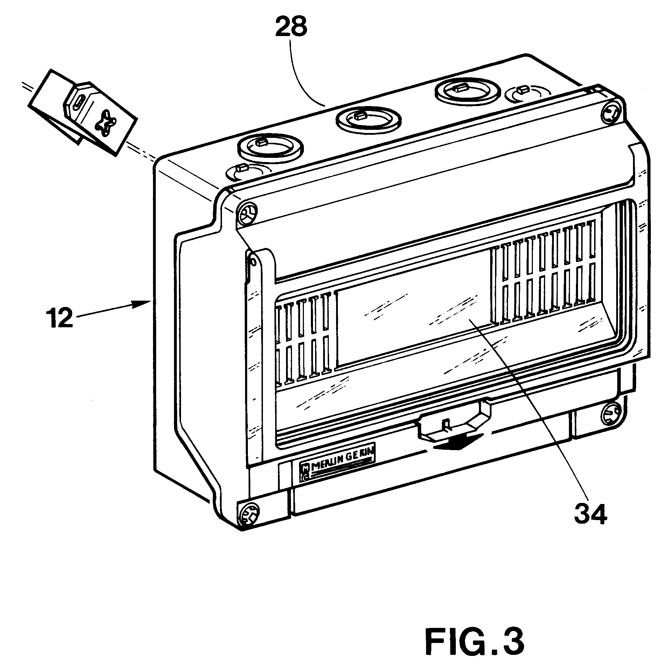

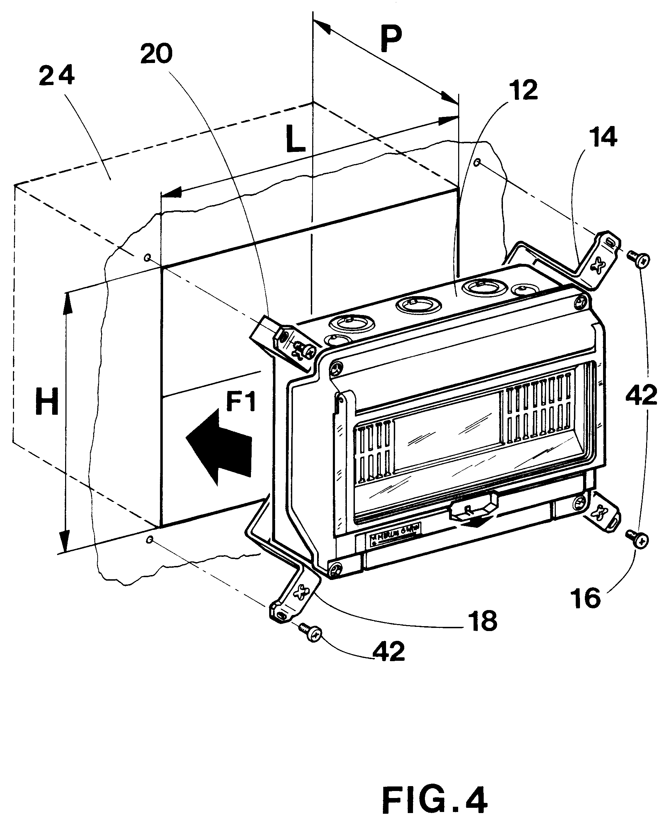

Après positionnement en croix des quatre pattes de fixation 14,16,18,20 du châssis 11 et solidarisation par les vis 39 des premières branches 26 postérieures au fond 28 du boîtier 12 (figures 2 et 3), ce dernier est introduit dans le logement 24 (voir flèche F1, figure 4), de manière à appliquer les orifices 40 des troisièmes branches 32 contre le mur, à l'extérieur du logement 24.

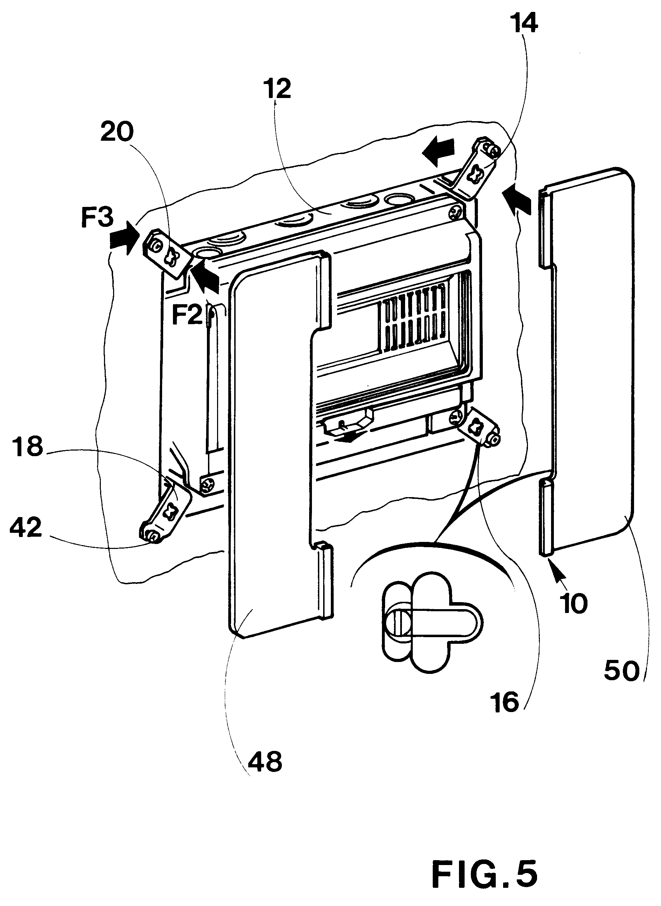

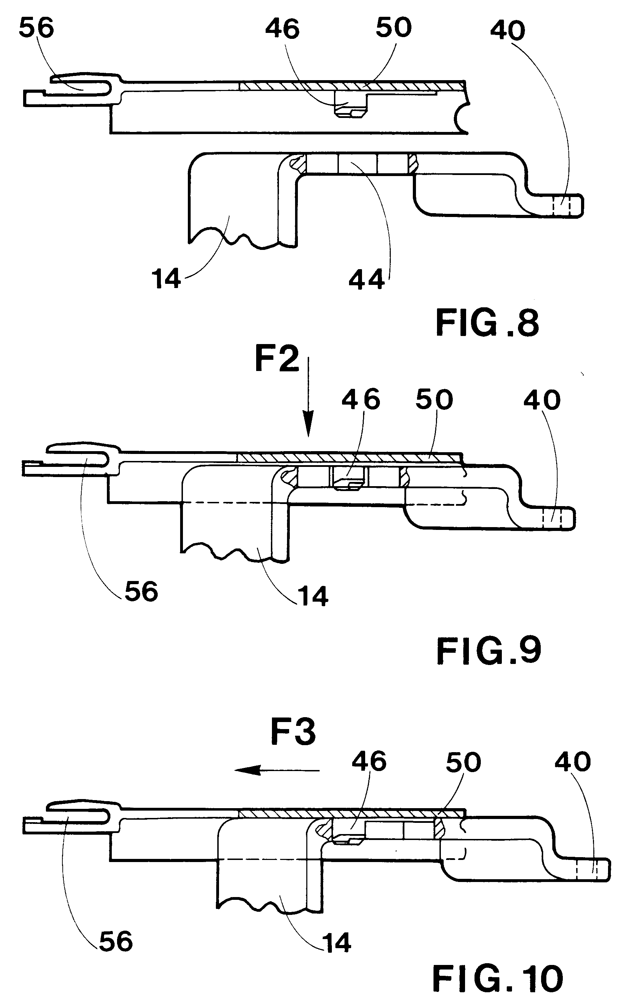

Sur la figure 5, l'introduction des vis 42 de fixation dans les orifices 40, assure le maintien stable du châssis 11 contre le mur. Chaque montant 48,50 est ensuite monté par encliquetage sur deux pattes de fixation 18,20; 16,14 situées d'un même côté par rapport à l'axe médian vertical du coffret 12. L'effet d'encliquetage résulte d'un double mouvement orthogonal en translation du montant 48,50 selon les flèches F2 et F3, correspondant respectivement à l'introduction et au verrouillage de chaque tenon 46 en T dans la lumière 44 en trèfle (figures 9 et 10).

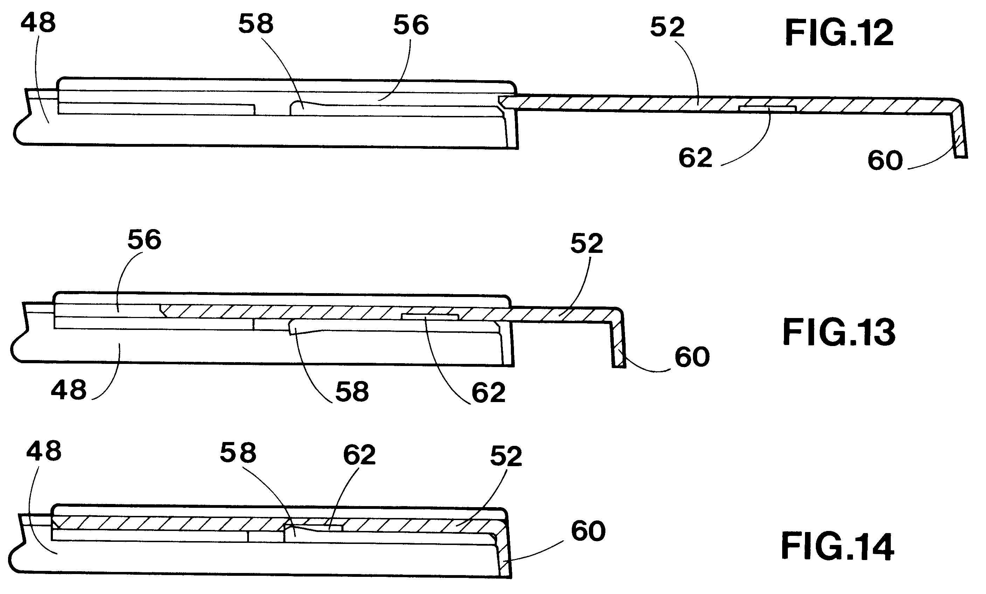

Après avoir choisi la longueur des deux traverses 52,54, les arêtes opposées de ces dernières sont enfilées dans le sens des flèches F4 à l'intérieur des glissières 56 correspondantes des montants 48,50 (figure 6). Les ergots 58 de verrouillage se déforment au cours du mouvement d'introduction des traverses 52,54 (figure 13).

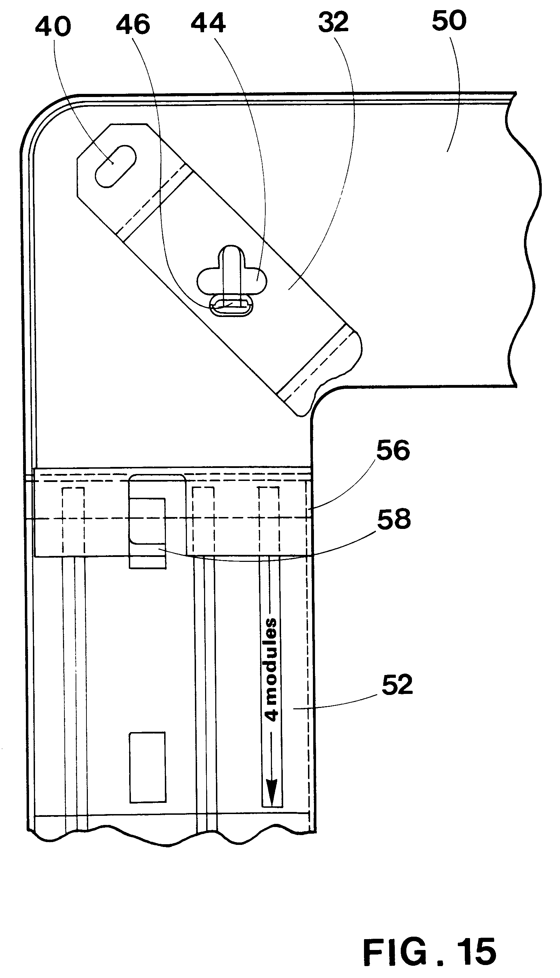

En fin de course, les traverses 52,54 sont maintenues positivement dans les glissières 56 par l'action mécanique de retenue des ergots 58 sollicités élastiquement en position de blocage vers l'intérieur des évidements 62 (figures 14 et 15).

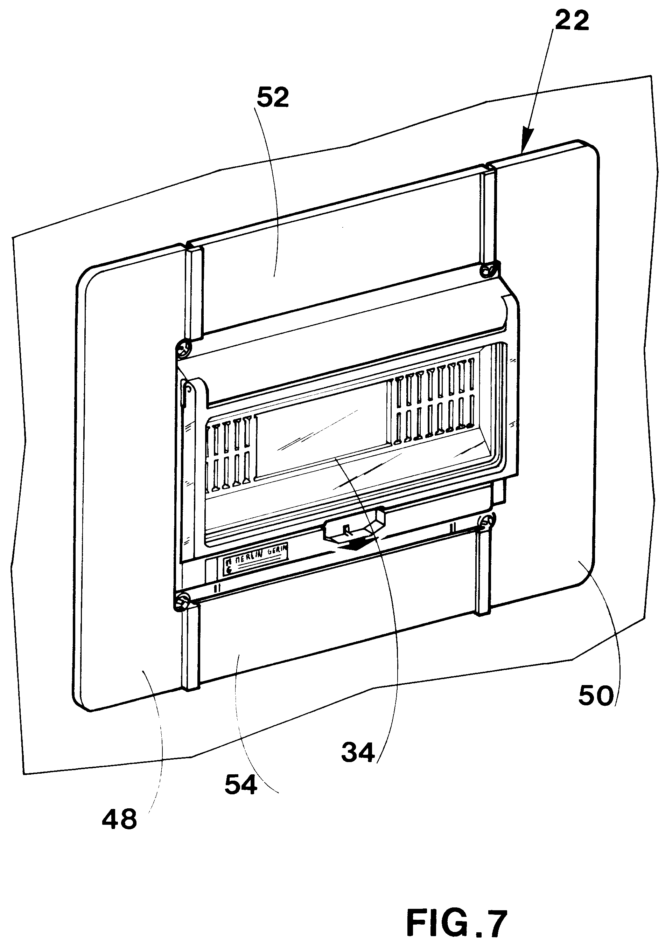

En référence a la figure 7, le coffret 12 se trouve encastré dans le logement 24, et équipé du cadre 22 rectangulaire d'habillage, laissant apparaître le couvercle rabattable de la face avant 34. La mise en place du cadre d'habillage 22 sur le châssis 11 s'effectue rapidement sans aucune vis de fixation apparente.

## Revendications

1.  Dispositif d'encastrement adaptable à un coffret (12) électrique de forme parallélépipèdique, inséré à l'intérieur d'un logement (24) ménagé dans un mur, et comprenant des moyens de fixation mécanique du coffret (12) au mur, caractérisé en ce que les moyens de fixation comportent un châssis (11) ayant deux paires de pattes (14,16; 18,20) métalliques de fixation murale, disposées en croix symétriquement par rapport au plan médian vertical, et solidarisées au fond (28) du boîtier (12) par des moyens d'assemblage et de positionnement (36,38,39) prévus sur les premières branches postérieures (26), chaque patte (14,16; 18,20) du châssis (11) étant pliée en double équerre et comprenant une troisième branche frontale (32) accessible depuis la face avant (34) et équipée:
    -   d'un orifice (40) appliqué contre le mur à l'extérieur du logement (24) pour autoriser le passage d'une vis (42) de fixation murale,
    -   de moyens d'encliquetage (44) agencés entre l'orifice (40) et la deuxième branche (30) intermédiaire,

    et qu'un cadre d'habillage (22) en matériau plastique est composé d'une paire de montants (48,50) et d'une paire de traverses (52,54) parallèles deux à deux, chaque montant (48,50) comprenant:
    -   des moyens d'assemblage (46) coopérant avec les moyens d'encliquetage (44) pour le montage de chaque montant (48,50) sur l'une des paires des pattes (14,16; 18,20) du châssis (11),
    -   et une paire de glissières (56) de réception destinées à recevoir les extrémités des traverses (52,54) pour constituer un cache rectangulaire modulaire sans vis de fixation apparente.

2.  Dispositif d'encastrement selon la revendication 1, caractérisé en ce que les moyens d'encliquetage (44) comportent une lumière en forme de trèfle, et que les moyens d'assemblage (46) sont composés d'au moins un tenon en forme de T, l'effet d'encliquetage résultant d'un double mouvement orthogonal en translation du montant (48,50) provoquant respectivement l'introduction et le verrouillage du tenon dans la lumière.

3. Dispositif d'encastrement selon la revendication 1 ou 2, caractérisé en ce que chaque glissière (56) de réception comporte un ergot (58) élastique de verrouillage coopérant avec un évidement (62) de la traverse (52,54) pour assurer un effet de blocage positif en fin de course d'insertion.

4. Dispositif d'encastrement selon la revendication 1,2 ou 3, caractérisé en ce que chaque montant 48,50 présente une forme en C, et que les traverses (52,54) comportent des lignes de prédécoupes (64) permettant de choisir leurs longueurs en fonction du nombre de modules du coffret 12.

FIG.1

FIG.2

28

12

34

FIG.3

FIG.4

**FIG.5**

**FIG.6**

**FIG.7**

56　　　　　46　　　50　　　　　40

**FIG.8**

**F2**

46　　50　　　　40

56　　　　　14

**FIG.9**

**F3**

46　　　50　　　　40

56　　　　14

**FIG.10**

**46**    **50**

**56**

**40**    **44**

**32**

# FIG.11

**FIG.12**

**FIG.13**

**FIG.14**

EP 0 494 571 A1

**40    46    44        32        50**

**56**

**58**

4 modules

**52**

# FIG . 15

Office européen
des brevets

**RAPPORT DE RECHERCHE EUROPEENNE**

Numero de la demande

EP  91 42 0459

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-1 540 330 (HARTMANN)<br>* Page 1, ligne 64 - page 2, ligne 3; figures 1-3 *<br>--- | 1 | H 02 B    1/42<br>H 02 G    3/14 |
| A | FR-A-2 038 818 (ETABLISSEMENTS ARNOULD S.A.)<br>* Page 1, ligne 30 - page 2, ligne 29; figures 1,2 *<br>--- | 1 | |
| A | FR-A-2 417 867 (MERLIN GERIN)<br>* Page 2, ligne 23 - page 3, ligne 37; figures 1-3 *<br>--- | 1 | |
| A | US-A-3 859 454 (MANN)<br>* Colonne 2, ligne 43 - colonne 3, ligne 32; figures 3,4 *<br>----- | 1 | |

DOMAINES TECHNIQUES RECHERCHES (Int. Cl.5)

H 02 B
H 02 G

Le présent rapport a été établi pour toutes les revendications

| Lieu de la recherche | Date d'achèvement de la recherche | Examinateur |
|---|---|---|
| LA HAYE | 24-02-1992 | LUND M. |